# EUROPEAN PATENT APPLICATION

(11) **EP 0 569 602 A1**
(43) Date of publication of application: **18.11.1993**
(21) Application number: 92924029.9
(22) Date of filing: 30.11.1992
(51) Int. Cl.: H04Q 9/00, G08C 23/00, H04B 10/10, H03J 9/06

(54) **SIGNAL RECEIVER AND SIGNAL RECEPTION METHOD**

(30) Priority: 29.11.1991 JP 315675/91; 02.11.1992 JP 294483/92; 26.11.1992 JP 317283/92
(71) Applicant: KABUSHIKI KAISHA TOSHIBA, Kawasaki-shi, Kanagawa-ken 210 (JP)
(72) Inventor: SHIMIZU, Tsuyoshi Tojumezon no. 203, Saitama-ken 364 (JP); TAKUMA, Masaaki 378-3, Nishionuma, Saitama-ken 366 (JP); UOTA, Junichi, Saitama-ken 366 (JP)
(74) Representative: Lehn, Werner, Dipl.-Ing.
(86) International application number: JP9201564
(87) International publication number: WO9311615

(57) **Abstract**

A photodetector for receiving a remote-control signal is disposed at the back of a display having light transmissivity, and signal light transmitted from a remote place passes through the display and enters the photodetector. Accordingly, a range of reception of remote-control light can be expanded, and this makes it easy to point a remote-control transmitter correctly.

## Description

### Technical Field:

This invention relates to a signal receiving apparatus and signal receiving method for receiving a optical signal transmitted from a remote place to be used for such electronic device having such displaying body having a light-permeability as a liquid crystal panel as, for example, a television receiver, video tape recorder, acoustic device, air conditioning device, cordless word processor or personal computer or telephone device.

### Background Technique:

A plane displaying body represented by a liquid crystal panel is smaller in the volume and more compact than a cathode ray tube of the same picture size. The problems of the brightness and visual field angle of the displayed picture of the liquid crystal panel which have been considered to be inferior to those of the cathode ray tube have been improved and the picture quality of the liquid crystal panel is gradually approaching that of the cathode ray tube. Thus, the plane displaying body represented by such liquid crystal panel is noted as a displaying device replacing the cathode ray tube.

In such electronic device as a television receiver, video tape recorder, acoustic device, air conditioning device, cordless word processor or personal computer, telephone device or facsimile, the liquid crystal panel is used for the device displaying such information as a picture or character.

Also, such electronic device is required to have a remote-controlling function and remote-transmitted data receiving function and such functions are realized by converting controlling signal or transmitting data to a optical signal and transmitting the optical signal to the electronic device.

Such electronic device requires a receiving apparatus for receiving a optical signal transmitted from a remote place. Such receiving apparatus has a photoelectric conversion type photo receptor represented by a photodiode, receives a optical signal with this photo receptor, converts it to an electric signal and inputs the electric signal into a circuit in the later step to control the electronic device or receive the transmitted data.

The photo receptor must be provided in a position which an obstacle intercepting the optical signal will not enter between a transmitting signal source and the photo receptor as a rule.

For example, in a liquid crystal television which can be remote-controlled, in order to favorably receive a optical signal transmitted by a remote-controlling signal transmitter, a space of a size proper for a light receiving part including the photo receptor must be provided on the surface of the body of the liquid crystal television. The space for the light receiving part is one of the causes of producing a restriction on the design or appearance of the electronic device.

Particularly, in the displaying apparatus of a small liquid crystal television or the like, it is required that the entire apparatus should be compact and the ratio of the occupied displayed picture to the size of the apparatus should be large. In designing a small liquid crystal television, the space of the light receiving part on the body surface produces a great restriction.

In such electronic device required to receive a optical signal transmitted from a remote place, a light receiving part including the photo receptor for favorably receiving a optical signal has had to be provided on the surface of the electronic device body. There has been produced a problem that, though such plane displaying body as a liquid crystal panel has been used inherently with a view to compacting the electronic device, the effect has not been well utilized.

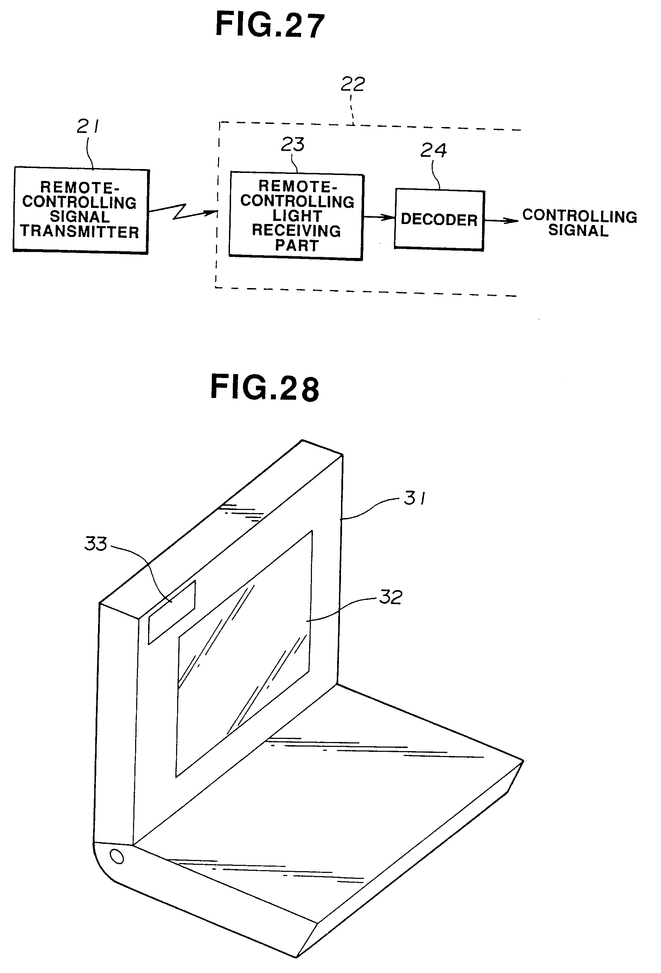

The conventional technique shall be explained with reference to Figs. 27 and 28.

Fig. 27 is a block diagram showing a remote-controlling apparatus for remote-controlling such electronic device as a television receiving apparatus, video tape recorder or air conditioning apparatus.

A optical signal by infrared rays is output from a remote-controlling signal transmitter 21 and is received by a remote-controlling light receiving part 23 within an electronic device 22. The optical signal from the remote-controlling signal transmitter 21 is formed of a carrier (30 to 40 kHz) intermittently (burst) carrier-burst-modulated (CW-modulated) by signal pulses. The remote-controlling light receiving part 23 comprises a PIN photodiode as a photosensor and a filter circuit tuning with the carrier frequency and outputs a pulse code signal having had the carrier removed as an output. The pulse code signal from the remote-controlling light receiving part 23 is input into a decoder 24 in which the logical level of "0" and "1" is determined on the basis of the length of the pulse interval and is output as a controlling signal. Such operations of the electronic device as on/off of the power source and switching of the channel are made on the basis of this controlling signal.

Fig. 28 is a perspective view of a liquid crystal television having a remote-controlling light receiving part.

The liquid crystal television apparatus body comprises a housing body 31, liquid crystal panel 32 and remote-controlling light receiving part 33 and is provided with a driving circuit not illustrated so that the liquid crystal panel 32 may be driven by this driving circuit to display a picture. A optical signal by infrared rays is incident upon the remote-controlling light receiving part 33 from a remote-controlling signal transmitter not illustrated to control switching the power source on/off and switching the channel.

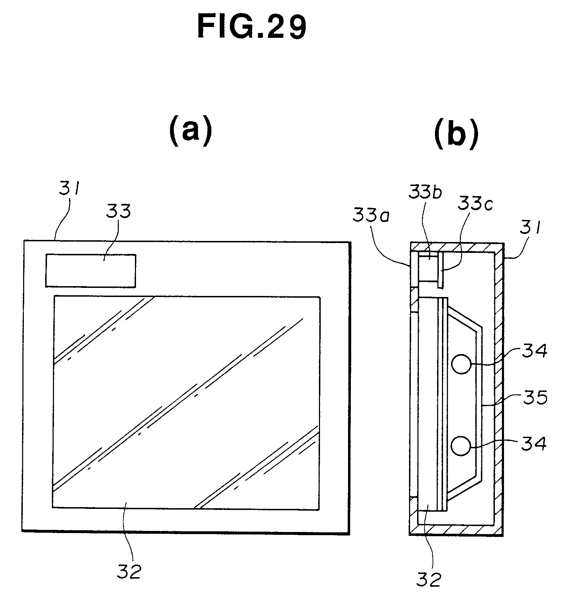

The structure of the remote-controlling light receiving part 33 shall be explained with reference to Fig. 29.

In Fig. 29, (a) is an elevation of the liquid crystal television in Fig. 28 and (b) is its side view.

On the back surface of the liquid crystal panel 32 are provided back light tubes 34 for permeating a light and a reflector 35 for reflecting the light of the back light tubes 34. The light emitted from the back light tubes is reflected by the reflector 35, is incident upon the liquid crystal panel 32 fed with a driving signal and permeates through the liquid crystal panel 32 to become a picture light.

The remote-controlling light receiving part 33 comprises a light receiving lens 33a, photo receptor 33b and substrate 33c. The photo receptor 33b is provided on the substrate 33c. The light receiving lens 33a prevents the infrared ray light from being reduced in the sensing capacity by the dirt deposited on the photo receptor 33b. The signal by the infrared rays output from the remote-controlling signal transmitter not illustrated permeates through the light receiving lens 33a and is input into the photo receptor 33b which converts the optical signal by the infrared rays to an electric signal and feeds this electric signal to a controlling circuit not illustrated through a signal line path arranged on the substrate 33c. The controlling circuit makes the received light processing and code processing in response to the signal input into the photo receptor 33b and controls switching the power source on/off and switching the channel.

Thus, the remote-controlling light receiving part 33 is provided on the surface of the body of the liquid crystal television 31 to input the optical signal output from the remote-controlling signal transmitter. Therefore, in designing the liquid crystal television, it must be naturally considered to provide a space for the remote-controlling light receiving part 33.

In the case of a portable liquid crystal television, the entire apparatus is required to be small. Further, the ratio of the area of the displayed picture to the entire apparatus is required to be higher. On the other hand, the liquid crystal television is used as a liquid crystal monitor displaying information within an automobile. Figs. 28 and 29 show a formation example in which the light receiving part 33 is arranged in parallel with the liquid crystal panel 32. It is necessary to provide on the body surface a space for receiving the remote-controlling signal and is therefore disadvantageous to making the liquid crystal television body smaller.

As the light receiving lens 33a for protecting the photo receptor 33b from dirt is provided in the remote-controlling light receiving part 33, holes must be made in the device body and a perforating step is required in the production.

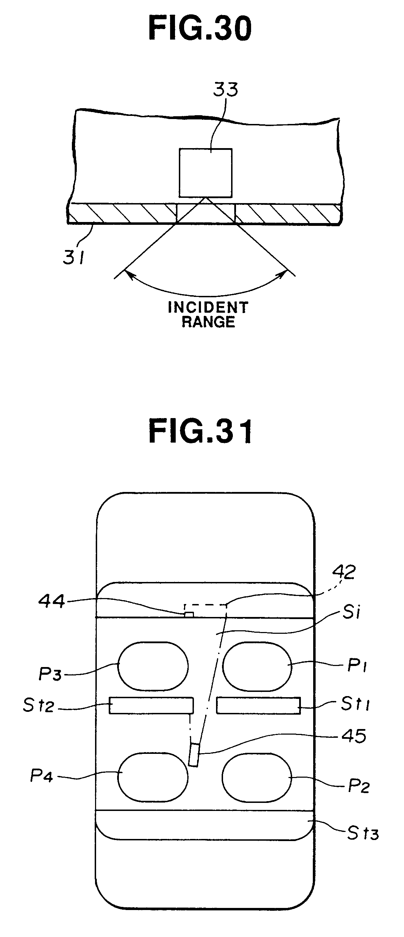

Also, in the conventional structure, when the remote controlling light receiving part 33 is arranged on the periphery outside the displayed picture, the range upon which the optical signal can be incident will be able to be expanded to some extent by enlarging the shape and size of the hole but it will be likely to restrict the appearance and reduce the structural strength of the body and therefore the size and shape of the hole will be limited to some degree. Therefore, as shown in Fig. 30, the incident range will be limited to be narrow.

Further, in the conventional structure, the space for providing the remote-control led light receiving part 33 has had to be provided on the surface of the body in order to receive the optical signal and has had to be secured independently of the displayed picture and therefore a perforating work for this space has had to be added to the step of the production. Also, the viewer will generally operate the remote-controlling signal transmitter while viewing the displayed picture in a position in the forward direction of the displayed picture. Therefore, in most cases, the viewer will shoot the remote-controlling optical signal against the displayed picture as a target. Therefore, the position of the remote-controlling light receiving part 33 in the conventional structure will not always coincide with the place targeted by the viewer and the possibility of the optical signal being normally received will reduce. Also, it is preferable that the remote-controlling light receiving part is located on the extension of the advancing direction of the optical signal. As shown in Fig. 31, in a monitor to be mounted on a car, under the using environment, many obstacles (crew and seats) will be interposed between the targeted device body and viewer (remote-controlling signal transmitter) and all or most of the optical signal will be intercepted by them. In the position of the remote-controlling light receiving part 33 in the conventional structure, by the interposition of the obstacles intercepting the optical signal and targeting the displayed picture by the viewer, the possibility of the optical signal being normally received will be reduced.

Fig. 31 is a view of a car body as seen from above. The reference numeral 42 represents a liquid crystal monitor having a picture displaying part not illustrated. A remote-controlling light receiving part (connected to a controlling circuit not illustrated) 44 is provided independently of the picture displaying part as in Fig. 29. St1 to St3 represent seats. Crew members P1 to P4 are seated on the respective seats St1 to St3. When the crew member P4 on the rear seat St3 transmits a optical signal Si toward the monitor 42 through a remote-controlling signal transmiter 45, as the seat St2 which will be an obstacle is interposed between the monitor 42 and remote-controlling signal transmitter 45, a part of the optical signal Si to reach the light receiving part 44 will be intercepted by the seat St2. Therefore, from the seated position of the crew member P4, the optical signal Si will not be able to reach the remote-controlling light receiving part 44 and therefore the monitor 42 will not be able to be remote-controlled.

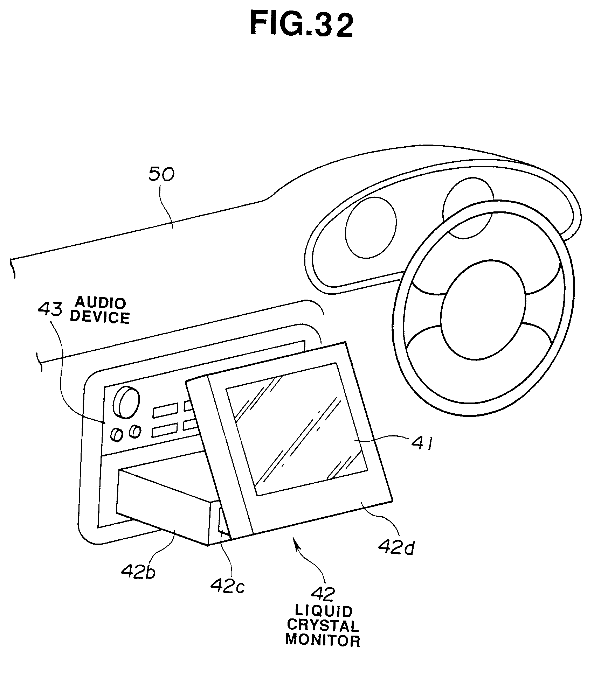

Fig. 32 is a view showing another example of the using state of a monitor mounted on a car and using a liquid crystal panel.

In this drawing, the liquid crystal monitor 42 and the other audio device 43 are arranged on the dashboard 41 within the automobile. In this liquid crystal monitor 42, a slider 42b is slidably contained within a box-like housing body part 42a and a monitor displaying part 42d is rotatably fitted by using a hinge mechanism 42c in the front end part of this slider 42b. In the using state, as in the drawing, the monitor displaying part 42d is pulled together with the slider 42b out of the housing body part 42a as in the drawing and then the monitor displaying part 42d is rotated with the front end part of the slider 42c to direct the displaying surface toward the visual field.

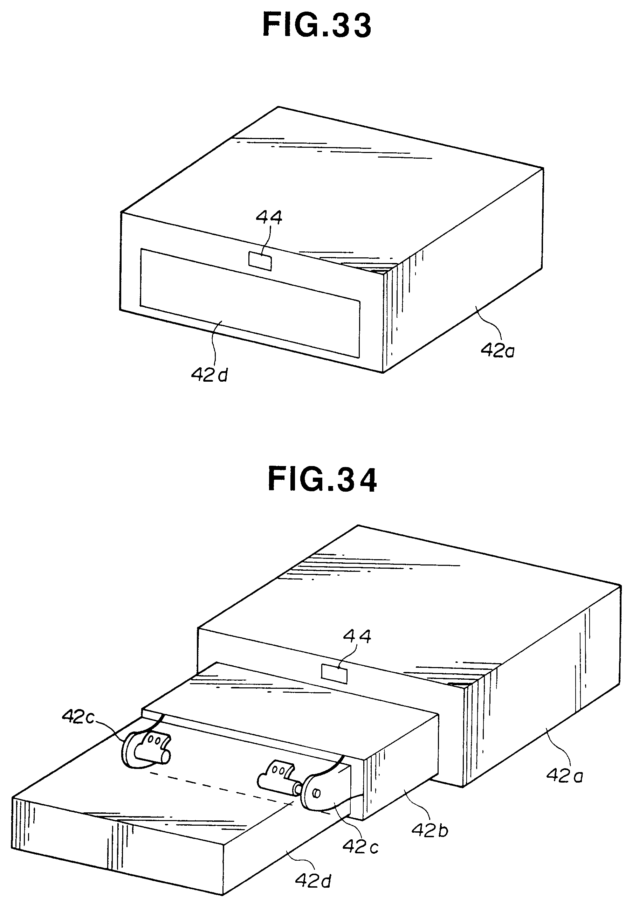

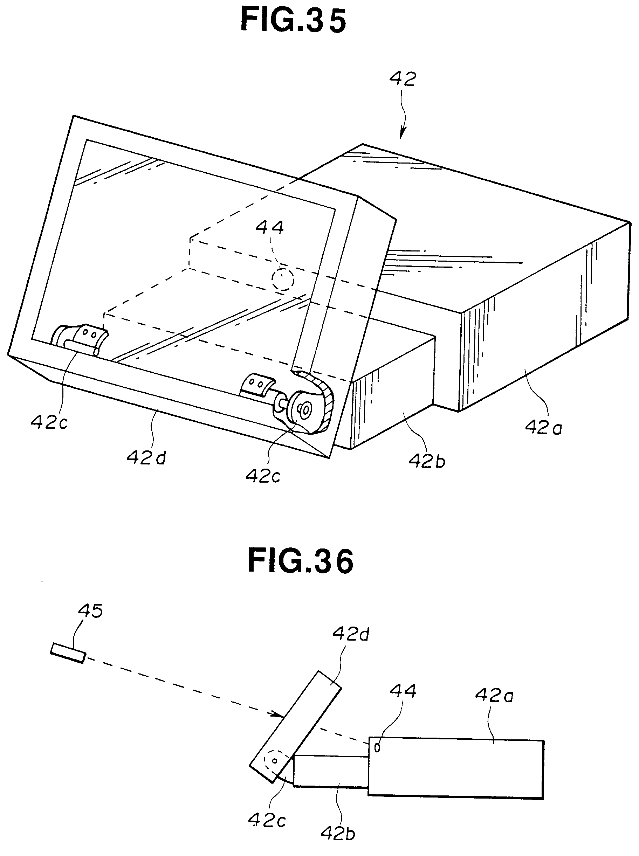

Figs. 33 to 35 are perspective views showing respective states of containing, releasing and using the liquid crystal monitor 42 in Fig. 32. The remote-controlling light receiving part 44 is arranged in the space on the front surface of the housing body part 42a. When contained, as shown in Fig. 33, the monitor displaying part 42d will be contained within the housing body part 42a. When the monitor displaying part 42d is pulled out of this containing state, as shown in Fig. 34, the slider 42b will be pulled out together with the monitor displaying part 42d and the monitor displaying part 42d will be released out of the housing body part 42a. When the front end part of the motor displaying part 42d is rotated upward with the hinge mechanisms 42c, as shown in Fig. 35, the monitor displaying part 42d will be held at any angle with the slider 42b so as to be usable. The side view of Fig. 35 is shown in Fig. 36.

Now, in the conventional contained type car mounted monitor, when used, as shown in Fig. 36, as the remote controlled light receiving part 44 is provided on the housing body part 42a side, when seen from the position of the viewer operating the remote-controlling signal transmitter, the remote-controlling light receiving part will enter the shade of the monitor displaying part 42d, the optical signal from the remote-controlling signal transmitter 45 will be intercepted by the monitor displaying part and therefore the liquid crystal monitor will not be able to be operated.

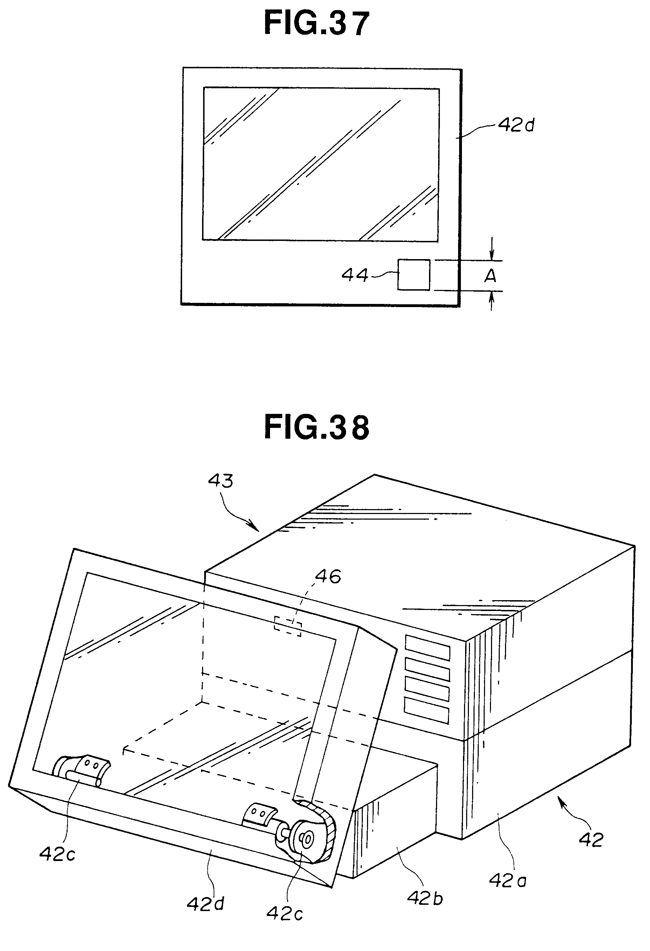

When the light receiving part 44 is arranged not in the housing body part 42a but is arranged in a space on the displaying surface of the monitor displaying part 42d as shown in Fig. 37, a space A for providing the light receiving part somewhere in the monitor displaying part body will be always necessary and will be disadvantageous to making the car mounted monitor small.

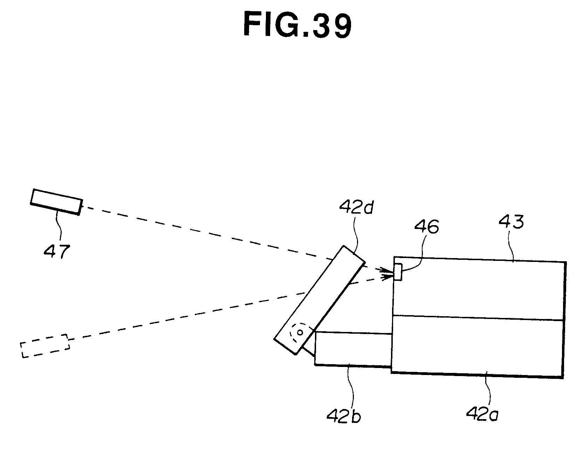

Fig. 38 shows a formation example in the case of controlling the other audio device 43 than the liquid crystal monitor 42 with a remote-controlling signal transmitter. In this formation, as shown in Fig. 39, in the using state of the liquid crystal monitor 42, the monitor displaying part 42d will intercept the remote-controlling light receiving part 46 of the other audio device 43, the optical signal from the audio remote-controlling signal transmitter 47 will not reach the audio remote-controlling light receiving part 46 and the signal will not be able to be received. Therefore, the audio device 43 hidden in the shade of the monitor displaying part 42d will not be able to be operated.

As mentioned above, in an electronic device controlled or receiving data by a optical signal transmitted from a remote place, a light receiving part for receiving the optical signal must be provided on the body surface and the space of this light receiving part has been a restriction on the design or appearance.

Therefore, the present invention has it as an object to provide a signal receiving apparatus and signal receiving method which can eliminate the space of a light receiving part for receiving a optical signal from the body surface of an electronic device controlled or receiving data with a optical signal transmitted from a remote place and can reduce the restriction on the design or appearance of the electronic device body.

### Disclosure of the Invention:

This invention comprises a displaying body having a light-permeability and a photo receptor receiving a optical signal transmitted from a remote place and provided on the back surface side of the above mentioned displaying body and on the light path after the incidence of the optical signal incident upon the above mentioned displaying body.

According to such formation, in an electronic device comprising such displaying body having a light-permeability as a liquid crystal panel and a photo receptor provided on the back surface side of the above mentioned displaying body, permeating a signal light through the above mentioned displaying body and inputting the optical signal into the above mentioned photo receptor to control or receive data with the optical signal transmitted from a remote place, the space of the light receiving part for receiving the optical signal can be eliminated from the surface of the body and the restriction on the design or appearance of the body of the electronic device can be reduced.

### Brief Description of the Drawings:

Fig. 1 is a view showing a signal receiving apparatus and signal receiving method of the first embodiment of the present invention.

Fig. 2 is a sectioned view of a TN type liquid crystal panel used in the embodiment in Fig. 1.

Fig. 3 is a perspective view showing a signal receiving apparatus of the second embodiment of the present invention.

Fig. 4 is a vertically sectioned view of a monitor displaying part in Fig. 3.

Fig. 5 is a side view of Fig. 3.

Fig. 6 is a horizontally sectioned view of a monitor displaying part in Fig. 3.

Fig. 7 is an elevation showing the third embodiment of the present invention.

Fig. 8 is an elevation showing the fourth embodiment of the present invention.

Fig. 9 is an elevation showing the fifth embodiment of the present invention.

Fig. 10 is a perspective view showing the appearance of a signal receiving apparatus of the sixth embodiment of the present invention.

Fig. 11 is an operation explaining view of Fig. 10.

Fig. 12 is a plan view showing the seventh embodiment of the present invention.

Fig. 13 is an operation explaining view of Fig. 12.

Fig. 14 is a perspective view showing a signal receiving apparatus of the eighth embodiment of the present invention.

Fig. 15 is a side view of Fig. 14.

Fig. 16 is a perspective view shoring a signal receiving apparatus of the ninth embodiment of the present invention.

Fig. 17 is a block diagram showing a liquid crystal television image receiver to which a signal receiving apparatus of the tenth embodiment is applied.

Fig. 18 is a view in which a marker showing the position of a photo receptor in Fig. 17 is displayed on a liquid crystal panel.

Fig. 19 is a view in which a marker showing the position of a photo receptor in Fig. 17 is displayed on a liquid crystal panel.

Fig. 20 is a view in which a marker showing the position of a photo receptor in Fig. 17 is displayed on a liquid crystal panel.

Fig. 21 is a view in which a marker showing the position of a photo receptor in Fig. 17 is displayed on a liquid crystal panel.

Fig. 22 is a view in which a marker showing the position of a photo receptor in Fig. 17 is displayed on a liquid crystal panel.

Fig. 23 is a view in which a marker showing the position of a photo receptor in Fig. 17 is displayed on a liquid crystal panel.

Fig. 24 is a view in which a marker showing the position of a photo receptor in Fig. 17 is displayed on a liquid crystal panel.

Fig. 25 is a view in which a marker showing the position of a photo receptor in Fig. 17 is displayed on a liquid crystal panel.

Fig. 26 is a view in which a marker showing the position of a photo receptor in Fig. 17 is displayed on a liquid crystal panel.

Fig. 27 is a block diagram showing the formation of a conventional remote-controlled apparatus.

Fig. 28 is a perspective view of a liquid crystal television using a conventional light receiving part structure.

Fig. 29 is a view showing a liquid crystal television receiver using a conventional light receiving part structure.

Fig. 30 is a view showing a defect of a light receiving part structure in Fig. 29.

Fig. 31 is a view of a car body interior as seen from above.

Fig. 32 is a perspective view showing an example of a conventional car mounted monitor.

Fig. 33 is a perspective view for explaining the operation of Fig. 32.

Fig. 34 is a perspective view for explaining the operation of Fig. 32.

Fig. 35 is a perspective view for explaining the operation of Fig. 32.

Fig. 36 is a side view of Fig. 35.

Fig. 37 is a view showing another example of a remote-controlling light receiving part in a car mounted monitor.

Fig. 38 is a perspective view showing a conventional example in the case of receiving a remote-controlling light in another audio device than a car mounted monitor.

Fig. 39 is a side view of Fig. 38.

### Best Form to Work the Invention:

This invention shall be explained in detail with the illustrated embodiments.

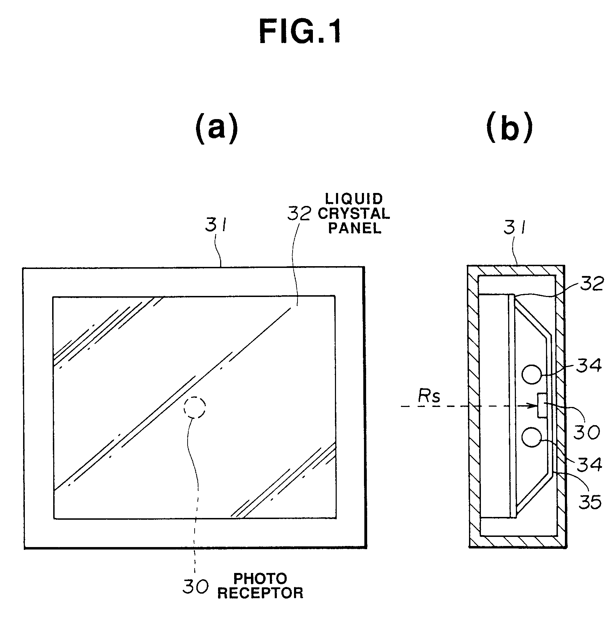

Fig. 1 is a view showing the first embodiment of a signal receiving apparatus of this invention. This embodiment corresponds to the conventional examples in Figs. 28 to 30. Fig. 1(a) is an elevation of a liquid crystal television receiver to which this embodiment is applied. Fig. 1(b) is a side view thereof.

In Figs. 1(a) and (b), the components bearing the same reference numerals as in Fig. 29 have the same functions and therefore shall not be explained in detail here.

A liquid crystal television receiver in Fig. 1 comprises a housing body 31, a liquid crystal panel 32 provided on the front surface of this housing body 31, a reflector 35 covering the back surface of this liquid crystal panel 32 and a photo receptor 30 provided on the reflector 35 so that the receiving surface of the photo receptor may be opposite the liquid crystal panel 32. By the way, the reflector 35 is used also as a substrate of the photo receptor 30.

A optical signal Rs by infrared rays output from a remote-controlling signal transmitter not illustrated permeates through the liquid crystal panel 32 and is input into the photo receptor 30.

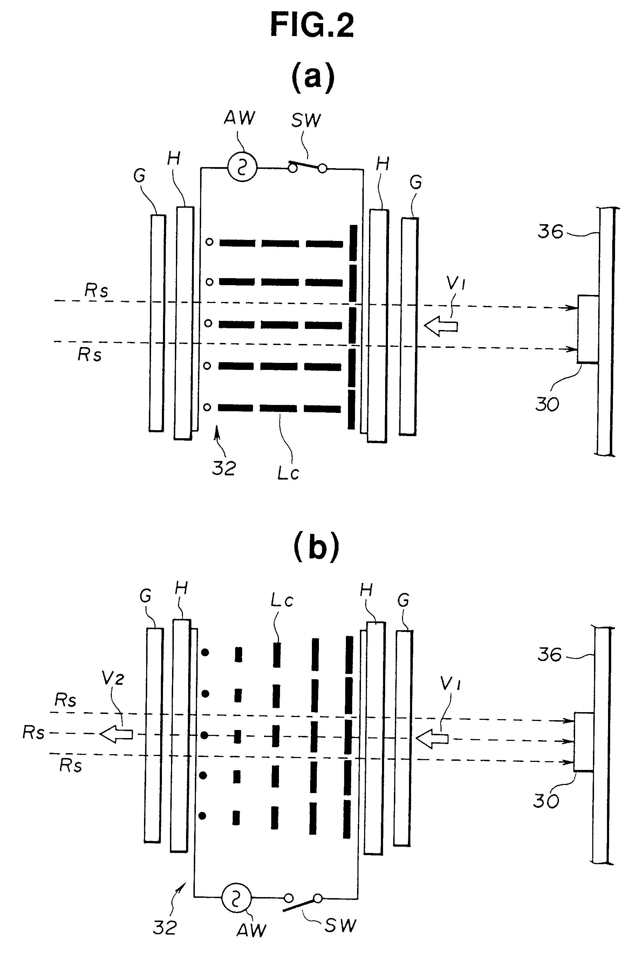

The operation of the optical signal Rs output from the remote-controlling signal transmitter and permeating through the liquid crystal panel 32 shall be explained with reference to Fig. 2.

Figs. 2(a) and (b) are sectioned views of a TN (twist nematic) type liquid crystal panel 32. This liquid crystal panel 32 is a normally white liquid crystal panel fully opened when no voltage is applied. Fig. 2(a) shows a fully closed state. Fig. 2(b) shows a fully opened state.

In Fig. 2, G represents a glass plate, H represents a light deflecting plate, Lc represents a liquid crystal, V1 represents a light emitted from a back light tube not illustrated and V2 represents a video light having permeated through the liquid crystal panel 32. AW represents a voltage source for applying a voltage between the electrodes at both ends of the liquid crystal Lc and SW represents a switch switching on/off the voltage source AW.

The liquid crystal panel 32 is formed by holding the liquid crystal Lc with the light deflecting plates H and further with the glass plates G. A optical signal Rs output from a remote-controlling signal transmitter not illustrated is incident upon the liquid crystal 32.

The photo receptor 30 is provided on the substrate 36 and is connected to a signal line path arranged on the substrate 36.

In the state of Fig. 2(a), the liquid crystal panel 32 is fully closed and therefore no video light is emitted but a optical signal Rs output from a remote-controlling signal transmitter passes through the gap between the respective liquid crystals and permeates through the liquid crystal panel 32. In the state of Fig. 2(b), the liquid crystal panel 32 is fully opened and therefore the optical signal Rs permeates through the liquid crystal panel 32 substantially without a loss.

In both states of Figs. 2(a) and (b), the optical signal Rs permeates through the liquid crystal and is input into the photo receptor 30. The photo receptor 30 converts the input optical signal Rs to an electric signal and feeds the electric signal to a controlling circuit not illustrated through the signal line path arranged on the substrate 36. The controlling circuit correspondingly processes the optical signal output from the remote-controlling signal transmitter.

This operation has been confirmed by an experiment with a optical signal of a wavelength of 950 nm (nanometers) from a remote-controlling signal transmitter by using a liquid crystal panel (Model No. TSD40W08) made by Toshiba.

As this embodiment is applied to a liquid crystal television receiver having a back light tube 34, the photo receptor 30 is provided in a position in which the optical signal Rs output by the remote-controlling signal transmitter is not obstructed by the back light tube 34 to prevent the sensitivity reduction of the photo receptor 30. That is to say, the photo receptor 30 is provided in a position in which the photo receptor 30 will not enter the shade of the back light tube 34.

By the way, in the experiment, even when the photo receptor 30 was provided in a position in which the photo receptor 30 entered the shade of the back light tube 34, the operation was confirmed.

In an apparatus in which the back light tube 34 is not provided, the photo receptor 30 may be provided in contact with the back surface of the liquid crystal panel 32.

In this embodiment, the photo receptor 30 is formed on the reflector 35 but, in a structure in which a substrate is arranged on the back surface of the reflector, the photo receptor 30 may be arranged by perforating the reflector 35.

That is to say, the position of the photo receptor may be determined so that the optical signal having permeated through the liquid crystal panel 32 may reach the photo receptor 30.

In this embodiment, when the light receiving structure by the present invention is used for a liquid crystal television receiver, the area ratio of the liquid crystal panel 32 to the apparatus body, that is, the ratio of the picture area will be elevated.

As the photo receptor 30 can be protected from dust by the liquid crystal panel 32, the perforating step for providing the apparatus body with a light receiving lens can be omitted.

As the photo receptor 30 is positioned on the back surface of the liquid crystal panel, it is easy for the user to judge the light receiving position of the optical signal emitted from the remote-controlling signal transmitter and the remote-controlling operation can be positively made.

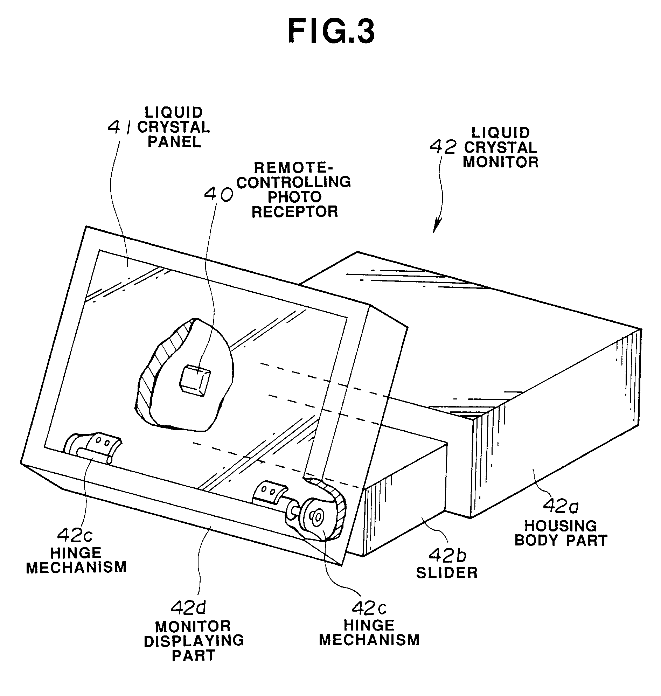

Fig. 3 is a block diagram showing a signal receiving apparatus of the second embodiment of the present invention. This embodiment corresponds to the conventional examples in Figs. 31 to 39. The components bearing the same reference numerals as in Fig. 32 have the same functions and therefore shall not be explained in detail here.

In Fig. 3, in a liquid crystal monitor 42, a slider 42b is slidably contained within a box-like housing body part 42a and a monitor displaying part 42d is rotatably fitted to the front end part of this slider 42b by using hinge mechanisms 42c. A remote-controlling photo receptor 40 is provided on the back surface side of a liquid crystal panel 41 in the monitor displaying part 42d and in the central part (the point of the intersection of the diagonals and its near point) of the liquid crystal picture. In the using state, as in the drawing, the monitor displaying part 42d is pulled together with the slider 42b out of the housing body part 42a and then the monitor displaying part 42d is rotated by the front end part of the slider 42b to direct the displaying surface toward the visual field of the user.

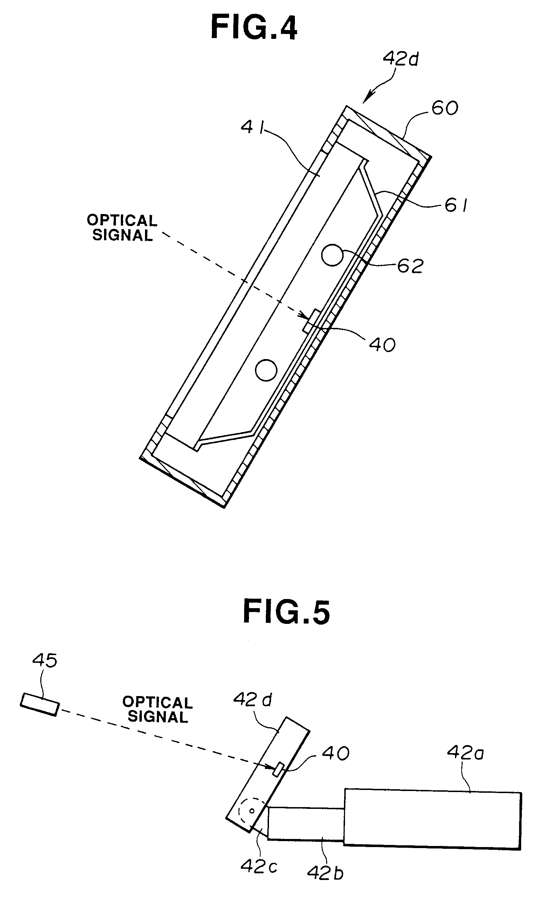

Fig. 4 is a vertically sectioned view of the monitor displaying part 42d in Fig. 3. The monitor displaying part 42d comprises a housing body 60, a liquid crystal panel 41 provided on the front surface of this housing body 60, a reflector 61 covering the back surface of this liquid crystal panel 41, a back light tube 62 for a permeating light within this reflector 61 and a photo receptor 40 provided in the reflector 61 so that the receiving surface of the photo receptor may be opposite the liquid crystal panel 41. In this embodiment, the reflector 61 is used also as a substrate of the photo receptor 40.

A optical signal by infrared rays output from a remote-controlling signal transmitter not illustrated permeates through the liquid crystal panel 41 and is input into the photo receptor 40.

Fig. 5 is a side view of Fig. 3 and shows that a optical signal from a remote-controlling signal transmitter 45 reaches the remote-controlling light receiving device 40.

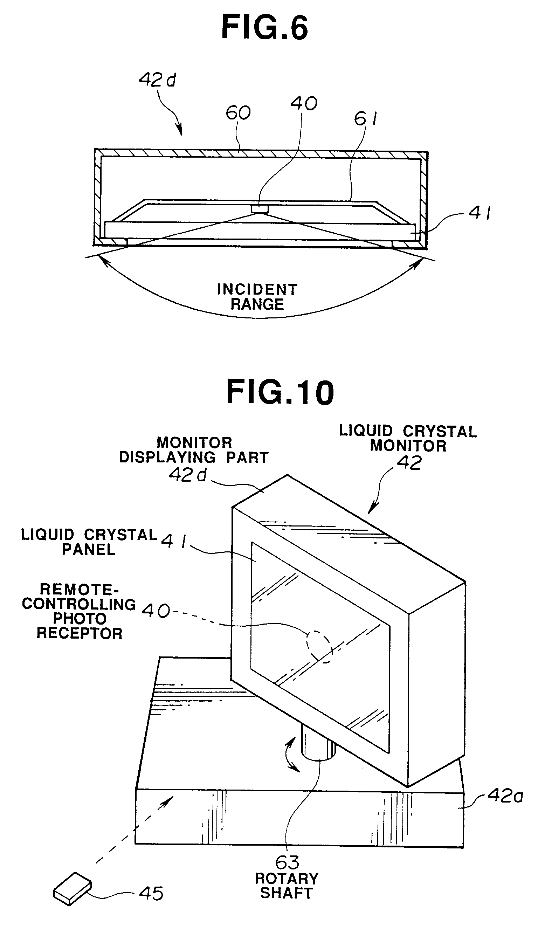

Fig. 6 shows a cross-sectioned view of the monitor displaying part in Fig. 3. When the photo receptor 40 is arranged in the central part of the liquid crystal picture, the displaying surface opening (that is, the opening of a front surface cover covering the photo receptor 40) on the front surface side of the housing body 60 will become much larger than in Fig. 30, the incident range of the optical signal upon the photo receptor 40 will be expanded and the balance of the vertical and horizontal incident angles will become best.

In the above mentioned embodiment, when the remote-controlling photo receptor 40 is provided in the central part of the picture, in case the optical signal permeates through the liquid crystal panel 41 and is input into the photo receptor 40, the incident angle of the optical signal upon the remote controlling light receiving part will be enlarged and the light will be able to be received even from an angle at which the light has not been able to be received. Particularly, in a car mounted monitor, many obstacles (crew members and seats) will be interposed between the monitor displaying part and the viewer (remote-controlling signal transmitter) but, when the viewer only operates the remote-controlling signal transmitter as directed to the substantially central part of the liquid crystal picture, the remote-controlling optical signal will be normally received in the photo receptor 40 in any position.

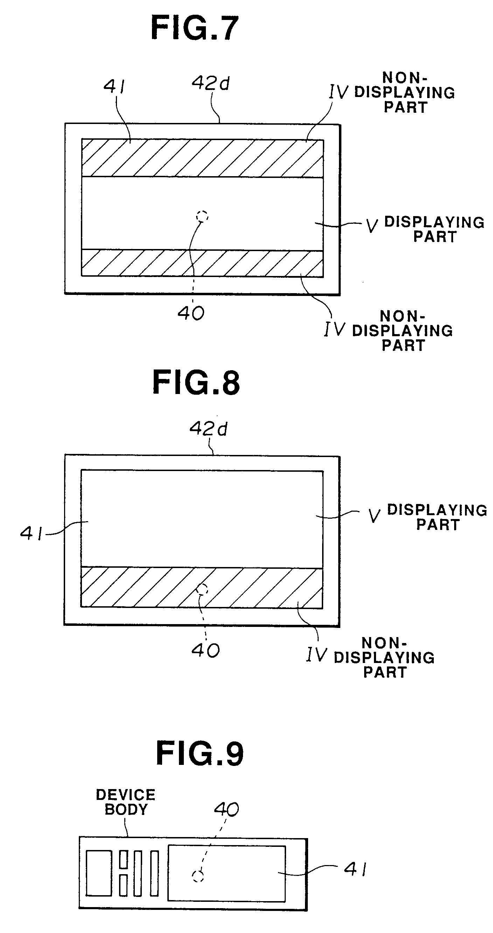

Figs.7 and 8 are elevations respectively showing the third and fourth embodiments of the present invention.

In Figs. 7 and 8, in the picture of the liquid crystal panel 41 of the monitor displaying part 42d, the picture image is displayed only in the displaying part V on the liquid crystal panel 41 but is not displayed in the non-displaying part IV. In case the aspect ratio (ratio of the vertical direction to the horizontal direction) of the liquid crystal panel 41 does not conform to the aspect ratio of the picture image, the displaying part V and non-displaying part IV will be produced on the liquid crystal panel 41.

On the back surface of the displaying part V of the liquid crystal panel 41 in Fig. 7, the photo receptor 40 is provided with the receiving surface directed toward the liquid crystal panel.

Also, on the back surface of the non-displaying part IV of the liquid crystal panel 41 in Fig. 8, the photo receptor 40 is provided with the receiving surface directed toward the liquid crystal panel.

In the embodiments in Figs. 7 and 8, the position of the photo receptor 40 is on the back surface of the displaying part V or the non-displaying part IV so as to be easy to see for the viewer SP.

Fig. 9 is an elevation showing the fifth embodiment of the present invention and is an elevation of an electronic device using a liquid crystal panel.

In Fig. 9, the photo receptor 40 is provided toward the center of the front surface panel of the electronic device body on the back surface of the liquid crystal panel 41 with the receiving surface directed toward the liquid crystal panel.

When the electronic device body is comparatively small and the area of the surface of the liquid crystal panel 41 is comparatively smaller than the area of the front surface panel of the electronic device body, the electronic device itself will be the part most noticeable to the viewer SP. In such case, particularly the central part of the front surface panel of the electronic device body will be most noticeable. It is possible to provide the light receiving part in the central part of the front surface panel of the remote-controlled electronic device but a space which can not be used except in the light receiving part will be provided to be a great restriction on the appearance.

In the embodiment in Fig. 9, the photo receptor 40 is provided toward the center of the front surface panel of the electronic device body on the the back surface of the liquid crystal panel 41 and therefore the light receiving part will be provided in the central part of the most noticeable front surface panel.The position of the photo receptor 40 will be a position easy to see for the viewer SP. Further, a space to be used for both of the displaying part and light receiving part can be made near the central part and the space can be efficiently saved.

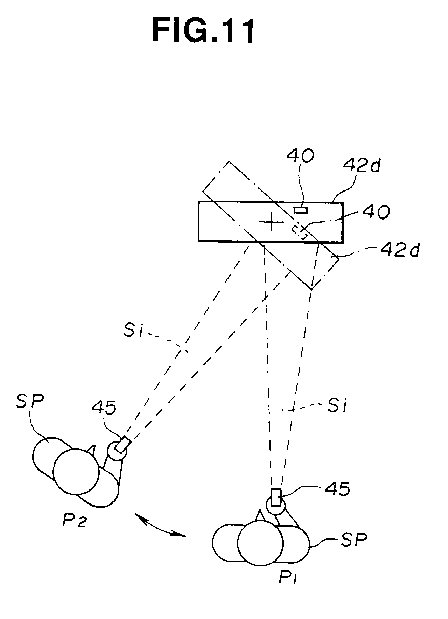

Fig. 10 is a perspective view showing the sixth embodiment of the present invention.

In the embodiment in Fig. 10, the monitor displaying part 42d is rotatably supported on the housing body part 42a with a rotary shaft 63.

Such effect as is shown in Fig. 11 will be obtained in the monitor of such formation. Fig. 11 is a view of the liquid crystal monitor and viewing viewer as seen from above. The viewer SP moves the viewing positions P1 and P2 and the liquid crystal monitor has a rotating means making the monitor displaying part 42d rotatable so that the viewer SP may move the monitor picture surface (liquid crystal panel surface not shown in this drawing) in the viewable direction in conformity with the viewing position of the viewer SP.

On the back surface of the liquid crystal panel of the monitor displaying part 42d, the photo receptor 40 is provided with the receiving surface directed toward the liquid crystal panel. The monitor displaying part 42d is so narrow in the effective visual field that, unless the picture is directed so as to be opposite the viewer, a picture image no video easy to see for the viewer SP will not be able to be provided.

The remote-controlling signal photo receptor 40 is arranged on the back surface of the monitor displaying part 42d so as to direct the receiving surface of the photo receptor toward the liquid crystal panel. That is to say, even if the monitor displaying part 42d is rotated, the receiving surface of the photo receptor 40 will be directed toward the viewer SP. When, in the respective viewing positions P1 and P2, the viewer SP operates the remote-controlling signal transmitter to emit a optical signal Si to the picture as a target, as the receiving surface of the photo receptor 40 is directed toward the viewer SP, the optical signal Si will permeate through the liquid crystal panel and then will be positively received. Therefore, if the viewer SP operates the remote-controlling signal transmitter 45 so that the optical signal may be emitted as directed toward the picture, the instruction of the viewer SP will be positively received in the monitor displaying part 42d and will be carried out. As the viewer SP notices the picture in most cases, the position of the photo receptor 40 is a position easy to see for the viewer SP.

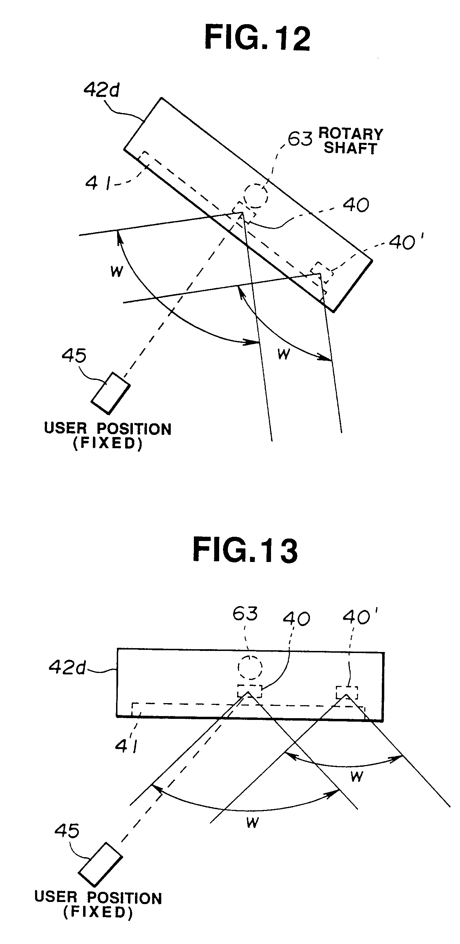

Figs. 12 and 13 are views showing the seventh embodiment of the present invention.

In the embodiment shown in these views, in the monitor of the formation shown in Fig. 10, the photo receptor 40 is provided around the rotary shaft 63 on the back surface side of the liquid crystal panel 41 so that the receiving surface of the photo receptor may be directed toward the liquid crystal panel.

In such arrangement, in case the optical signal from the remote-controlling signal transmitter 45 permeates through the liquid crystal panel 41 and is input into the photo receptor 40, the incident range of the optical signal upon the remote-controlling photo receptor 40 will be expanded.

This shall be explained with reference to Figs. 12 and 13. In case the user operates the remote controlling signal transmitter 45 in a predetermined position (position of the remote-controlling signal transmitter 45), if, first of all, as shown in Fig. 12, the direction of the displayed picture intersects at right angles with the incident direction of the optical signal from the remote-controlling signal transmitter 45, then the photo receptor 40 arranged near the rotary shaft 63 will have an incident range W of itself. Here, even if the photo receptor 40 is arranged in a position 40' off the rotary shaft 63, when the direction of the remote-controlling signal transmitter 45 is directed toward the position 40', the optical signal will enter the incident range W of the photo receptor 40' and therefore will be received in the same manner.

Now, the case of rotating the liquid crystal displaying picture around the rotary shaft 63 from the state in Fig. 12 to the state in Fig. 13 to change the direction of the picture shall be considered. At this time, the direction of the displaying picture will be rotated counter-clockwise and the optical signal from the remote-controlling signal transmitter 45 will enter the incident range W of the photo receptor 40 arranged near the rotary shaft 63 and will be received. However, in case the photo receptor is arranged in the position 40', even if the direction of the remote-controlling signal transmitter 45 is directed toward the position 40', the optical signal will not enter the incident range W of the photo receptor 40' and will not be received, because, if the photo receptor is arranged in the position 40' off the rotary shaft 63, the incident range of the photo receptor 40' for the viewer will move and will be hard to enter for the optical signal from the present position of the viewer.

In the above mentioned embodiment, as the remote-controlling photo receptor 40 is provided around the rotary shaft 63 of the rotatably supported liquid crystal panel 41, in case the optical signal permeates through the liquid crystal panel 41 and is input into the photo receptor 40, the incident range of the optical signal for the remote-controlling light receiving part will be expanded.

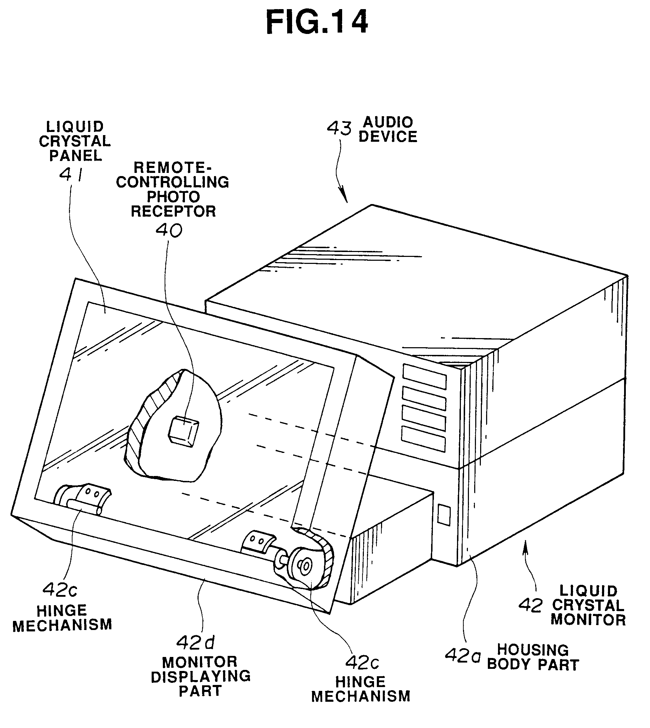

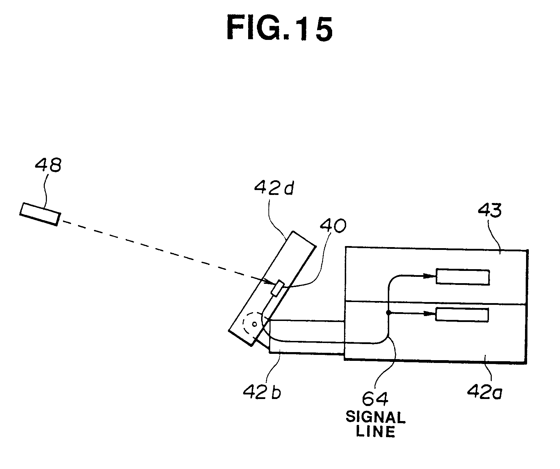

Figs. 14 and 15 show the eighth embodiment of the present invention. Fig. 14 is a perspective view. Fig. 15 is a side view thereof.

In this embodiment, another audio device 43 is arranged on the housing body part 42a of the liquid crystal monitor 42 and can be remote-controlled by the optical signal from the remote-controlling signal transmitter 48 the same as in the liquid crystal monitor 42. Here, the remote-controlling signal transmitter 48 can control not only the liquid crystal monitor 42 but also the audio device 43. The remote-controlling photo receptor 40 is provided on the back surface side of the liquid crystal panel 41, is connected to a circuit substrate located within the housing body part 42a of the liquid crystal monitor 42 by using a signal line 64 as shown in Fig. 15, is connected also to a circuit substrate located within another device 43a and can transmit an electric signal corresponding to the optical signal received by the photo receptor 40 within the monitor displaying part 42d not only to the housing body part 42a of the liquid crystal monitor 42 but also to the other audio device 43. Therefore, when the liquid crystal monitor 42 is operated by the remote-controlling signal transmitter 48 so as to be controlled, the liquid crystal monitor 42 will be controlled. When the other audio device 43 is operated by the remote-controlling signal transmitter 48 so as to be controlled, it will be controlled. Thereby, the monitor displaying part 42d hides the other audio device 43 but can operate it with the signal received by the photo receptor 40 arranged within the monitor displaying part 42d.

In the above mentioned embodiment, in case the optical signal permeates through the liquid crystal panel 41 and is input into the photo receptor 40, the optical signal for the other audio device 43 will be able to be received by the photo receptor 40 and therefore will be prevented from being hidden in the shade of the liquid crystal panel 41 and becoming unable to be received and the operation of the audio device 43 or the like will be able to be guaranteed.

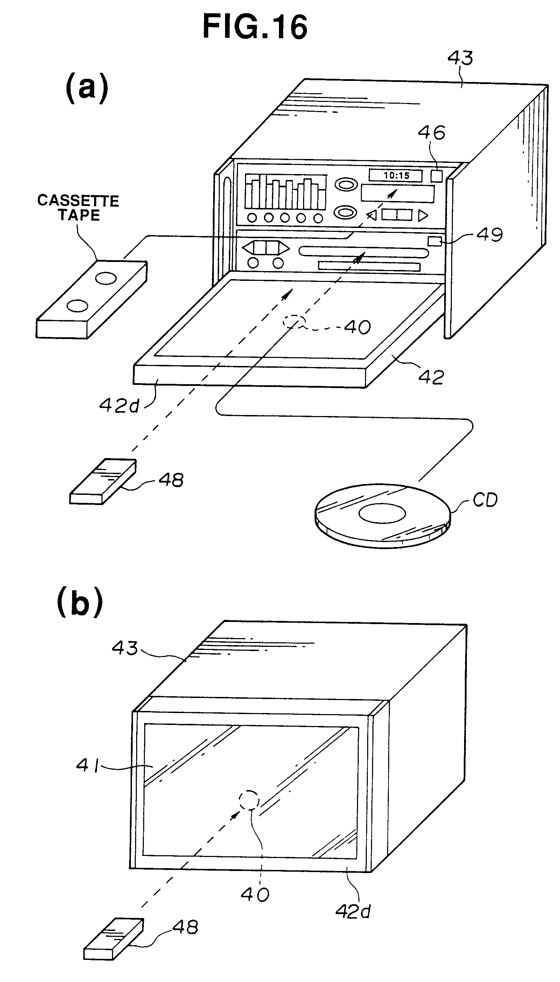

Fig. 16 is a perspective view showing the ninth embodiment of the present invention. In Fig. 16, (a) shows the monitor displaying part 42d as opened and (b) shows it as closed.

In Fig. 16(a), the monitor displaying part 42d is rotatably fitted like a lid to the front surface panel (controlling panel) of such audio device 43 as a cassette tape recorder or compact disc (mentioned as CD hereinafter) player so as to be able to be opened and closed with hinge mechanisms not illustrated and the photo receptor 40 is arranged on the back surface side of the liquid crystal panel 41 with the receiving surface directed toward the liquid crystal panel. As shown in Fig. 16(b), with respect to the monitor displaying part 42d closed, a optical signal for the liquid crystal panel from the remote-controlling signal transmitter 48 is received by the photo receptor 40 and is transmitted as converted to an electric signal to a liquid crystal driving part to control the liquid crystal panel 41. With respect to the monitor displaying part 42d opened, as shown in Fig. 16(a), a front panel of the audio device 43 is exposed and a player optical signal or CD player optical signal from the remote-controlling signal transmitter 48 is transmitted to a player photo receptor 46 or CD player photo receptor 49 provided on this front panel so that the operation of such device may be controlled. By the way, instead of directly arranging the photo receptors 46 and 49 on the front panel, only a optical signal intake opening is provided on the front panel so that the light incident through this light intake may be transmitted to an electronic circuit part within the device through mirrors or optical fibers arranged within the device.

According to the above described embodiment, when the remote-controlling photo receptor is arranged on the back surface side of the liquid crystal panel and in the central part of the picture, the space of the remote-controlling light receiving part will be able to be removed from the surface of the remote-controllable apparatus body, the restriction on the design or appearance of the apparatus body will be able to be reduced and the remote-controlling light receiving range will be able to be expanded.

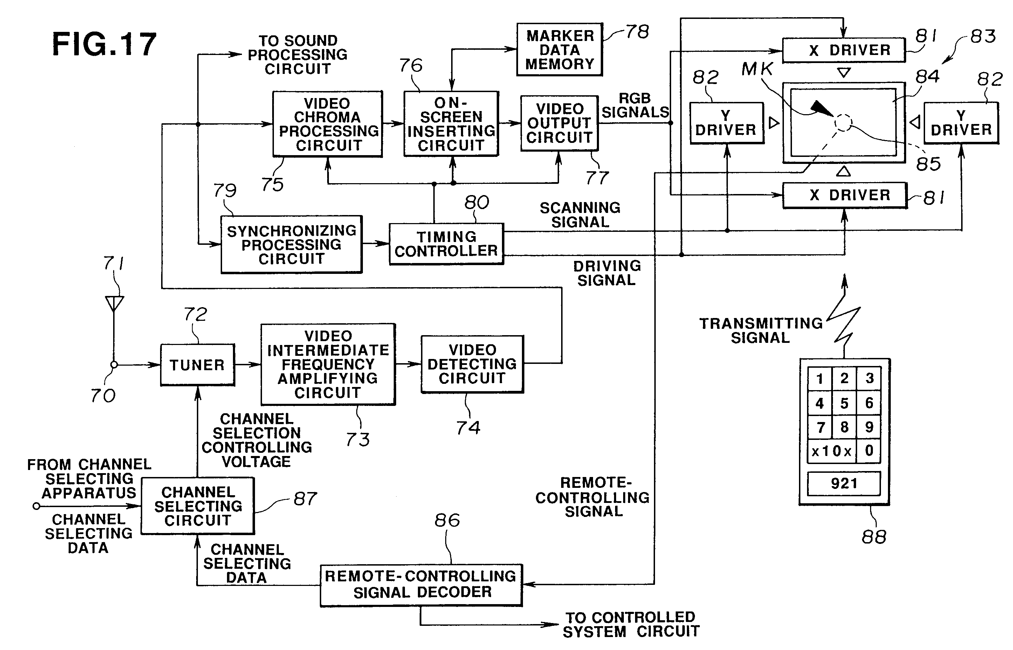

Fig. 17 is a block diagram showing a liquid crystal television receiving apparatus to which the signal receiving apparatus of the tenth embodiment of the present invention is applied. In this embodiment, the position of the remote-controlling photo receptor is marker-displayed so as to be easy to find by the user.

The television receiving apparatus shown in Fig. 17 has an antenna input terminal 70 to which is connected an antenna 71. A tuner 72 is connected to this antenna input terminal 70. A channel selecting circuit 87 for selecting channels is connected to the tuner 72. A video intermediate frequency amplifying circuit 73 and video detecting circuit 74 are successively connected to the after step of the tuner 72. A video signal processing system circuit, sound processing circuit not illustrated and synchronizing processing system circuit synchronizing the timing of the input and output of the video signal are connected to the after step of the video detecting circuit 74.

The circuit of the video signal processing system is formed by successively connecting a video chroma processing circuit 75, on-screen inserting circuit 76 and video output circuit 77. A marker data memory 78 is connected to the on-screen inserting circuit 76. The video output circuit 77 is connected to X drivers 81 of the liquid crystal displaying apparatus 83.

On the other hand, in the synchronizing processing system circuit, a synchronizing processing circuit 79 and timing controller 80 are connected. The timing controller 80 is connected to the video chroma processing circuit 75, on-screen inserting circuit 76 and video output circuit 77 forming the video signal processing circuit and is also connected to the X drivers 81 and Y drivers 82 of the liquid crystal displaying apparatus 83.

A liquid crystal displaying apparatus 83 is formed by including a liquid crystal panel 84 and the above described X drivers 81 and Y drivers 82 driving it.

A photo receptor 85 by a photodiode with the receiving surface directed to the panel side is provided on the back surface side of the liquid crystal panel 84. A remote-controlling signal decoder 86 is connected to the after step of the photo receptor 85. Not only the channel selecting circuit 87 but also such controlled system circuit (not illustrated) as a power source switch is connected to the remote controlling signal decoder 86.

The operation of this apparatus shall be explained in the following. A television signal is input into the antenna 71. The television signal input into the antenna 71 is input into the tuner 72. Channel selecting data for the viewer to select a desired channel are output from the remote controlling signal decoder 86 or a channel selecting apparatus not illustrated and are fed to a channel selecting circuit 87 in the after step. A channel selection controlling voltage corresponding to the fed channel selecting data is generated by the channel selecting circuit 87 and is input into a local oscillator (not illustrated) provided within the tuner 72. The local oscillator within the tuner 72 is formed of a voltage controlled oscillator and oscillates a signal of a frequency corresponding to the level of the channel selection controlling voltage. The oscillated signal of the local oscillator is mixed with a video signal and a video intermediate frequency signal is output from the tuner 72. The video intermediate frequency signal output from the tuner 72 is input into the video intermediate frequency amplifying circuit 73, is amplified and is then output. The amplified video intermediate frequency signal is fed to the video detecting circuit 74 which detects a composite video signal from the video intermediate frequency signal and outputs it.

The composite video signal output from the video detecting circuit 74 is input into the video chroma processing circuit 75, synchronizing processing circuit 79 and sound processing circuit not illustrated. In the video chroma processing circuit 75, the composite video signal is subjected to a Y/C separating process and chroma difference signal producing process, has a luminance signal and chroma difference signal extracted and is input into the on-screen inserting circuit 76 in the after step. Color developing data, luminance data and data (showing a displaying period on a horizontal line) of the displaying position on the picture for displaying a marker MK on the liquid crystal panel are memorized in a marker data memory 78 connected to the on-screen inserting circuit 76. When the power source rises or when the later described remote-controlling photo receptor 85 receives a remote controlling signal, the marker MK will be read out of the marker data memory 78. The on-screen inserting circuit 76 reads out these data on each horizontal line and superimposes them respectively on the luminance signal and chroma difference signal. When these data are superimposed on the luminance signal and chroma difference signal, the marker MK will be inserted on the picture and will be able to be displayed on the liquid crystal panel 84. By the way, the marker MK may be displayed on the liquid crystal picture while standing by the remote-controlling light signal reception before raising the power source and the marker MK displaying state (such as the displayed color) may be varied when the power source is raised by receiving the remote-controlling signal.

The luminance signal and chroma difference signal superimposed with the marker data are input into the video output circuit 77 which produces and outputs RGB signals of red, green and blue from the input luminance signal and chroma difference signal. The output RGB signals are written into the data lines of the X drivers 81 of the liquid crystal displaying apparatus 83 on each horizontal line.

On the other hand, the composite synchronizing signal input into the synchronizing processing circuit 79 has the vertical and horizontal synchronizing signals separated in the synchronizing processing circuit 79 and outputs a signal for controlling the timing controller 80 and the X drivers 81 and Y drivers 82 of the liquid crystal displaying apparatus 83 on the basis of these synchronizing signals.

The timing controller 80 outputs timing pulses respectively to the video chroma processing circuit 75, on-screen inserting circuit 76 and video output circuit 77 which are the circuits of the video signal processing system. The timing pulses output from the timing controller 80 are produced on the basis of the horizontal synchronizing signal and the above described processes in the respective circuit steps of the video chroma processing circuit 75, on-screen inserting circuit 76 and video output circuit 77 are made on each horizontal line.

A driving signal is input into the X drivers 81 and Y drivers 82 of the liquid crystal displaying apparatus 83 from the timing controller 80. The X driver 81 applies a driving voltage inverted in the polarity in each field to the drain line of a film transistor driving the liquid crystal pixels. The Y driver 82 applies a scannning signal to the gate line of the film transistor. Thus, in each field, RGB signals are written into the respective liquid crystal pixels and a picture image is displayed on the liquid crystal panel.

The photo receptor 85 is provided on the back surface side of the liquid crystal panel 84 with the receiving surface directed toward the liquid crystal panel. Therefore, the receiving surface of the photo receptor 85 is positioned so as to be opposed to the viewer seeing the liquid crystal panel 84. That is to say, the receiving surface of the photo receptor 85 is positioned to be directed to the arriving direction of the optical signal transmitted from a remote place. As the liquid crystal panel 84 is a light-permeable displaying body, if the viewer operates a remote-controlling signal transmitter 88 to transmit a optical signal to the liquid crystal panel 84 as a target, the optical signal will permeate through the liquid crystal panel 84 to reach the photo receptor 85.

The photo receptor 85 photoelectrically converts the input optical signal to produce a remote-controlling signal. This remote-controlling signal is input into the remote-controlling signal decoder 86 feeds a controlling signal into a controlled system circuit to make a control desired by the viewer. For example, if the viewer operates the remote-controlling signal transmitter 88 to select a desired channel, the remote-controlling decoder 86 will input channel selecting data into a channel selecting circuit 87 which inputs into the tuner 72 a channel selection controlling voltage produced under the channel selecting data so that the channel desired by the viewer may be selected.

Thus, when the viewer operates only the remote-controlling signal transmitter 88 to transmit a optical signal the same as before, the liquid crystal television receiver will be able to be remote-controlled. As the photo receptor 85 is arranged on the back surface side of the liquid crystal panel to receive the transmitted optical signal, the remote-controlling signal receiving part will be removed from on the surface of the liquid crystal television receiver. Also, as the photo receptor 85 is on the back surface side of the picture to be most noticed by the viewer, it will be easy for the viewer to find a position of the photo receptor 85 . Therefore, if the viewer transmits a optical signal to the liquid crystal panel as a target, the liquid crystal television receiver will be able to be positively remote-controlled.

Also, in the liquid crystal television receiver of this embodiment, as the marker MK showing the position of the photo receptor 85 is displayed on the liquid crystal panel 84 by the on-screen inserting circuit 76, the position of the photo receptor 85 will become easy to find by the viewer.

The marker MK is not limited only to the one shown in Fig. 17 but may be displayed in whatever form may show the position of the photo receptor. If the memorized contents of the marker data memory 78 are varied, the form of the marker MK will be easily variable. The displaying example shall be explained in the following with reference to the drawings.

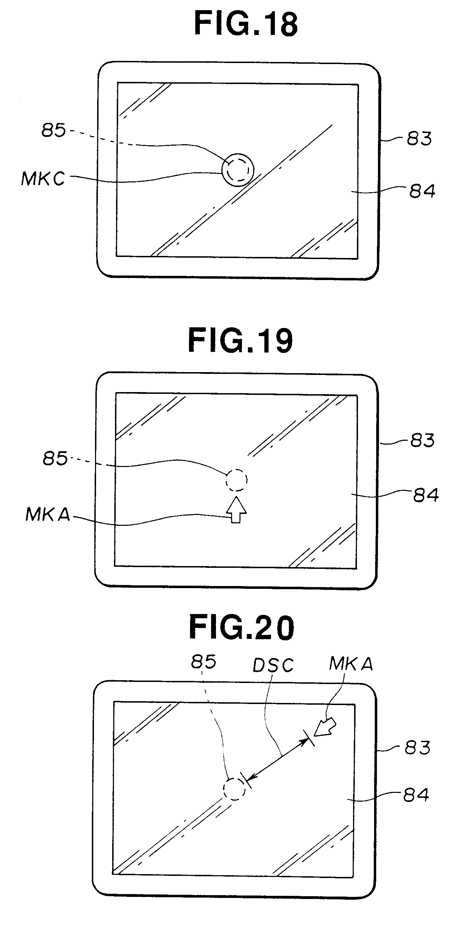

In Fig. 18, a marker MKC is displayed on the liquid crystal panel 84 of the display 83 to show the position of the photo receptor 85.

The marker MKC on the liquid crystal panel 84 is displayed as superimposed in the position in which the photo receptor 85 is provided. As soon as the viewer sees the marker MKC, he will be able to judge where the photo receptor 85 is. If a optical signal is transmitted to the marker MKC as a target, the liquid crystal television receiver will be able to be positively remote-controlled. Also, as illustrated in Fig. 18, in case the receiving surface projected area of the photo receptor 85 is small, if the area of the marker MKC is displayed to be larger than the area of the receiving surface of the photo receptor 85, the viewer's degree of recognizing the photo receptor 85 will be elevated to be higher.

Fig. 19 shows an arrow type marker MKA displayed on the liquid crystal panel 84 of the display 83 to show the position of the photo receptor 85.

The marker MKA on the liquid crystal panel 84 shows the direction of the position in which the photo receptor 85 is provided. The viewer can easily recognize that the photo receptor 85 is located in the direction indicated by the tip of the marker MKA. As the marker MKA on the liquid crystal panel 84 is displayed near the position in which the photo receptor 85 is provided, if the viewer transmits a optical signal to the marker MKA itself or the position in the direction indicated by the tip of the marker MKA on the liquid crystal panel as a target, the liquid crystal television receiver will be able to be positively remote-controlled.

Fig. 20 is of a modification of the embodiment shown in Fig. 19 and shows the arrow type marker MKA in a position separate by a predetermined distance DSC from the photo receptor 85 on the liquid crystal panel 84 of the display 83.

The same as in Fig. 19, the marker MKA on the liquid crystal panel 84 shows the direction of the position in which the photo receptor 85 is provided. However, in case an obstacle is interposed between the viewer and liquid crystal panel 84, when the arrow type marker MKA is displayed near the position of the photo receptor 85 as shown in Fig. 19, if the position of the photo receptor 85 is hidden by the obstacle, the marker MKA will be likely to be also hidden. Therefore, the viewer will be unable to judge the position of the photo receptor 85 and to easily and positively transmit the optical signal to the photo receptor.

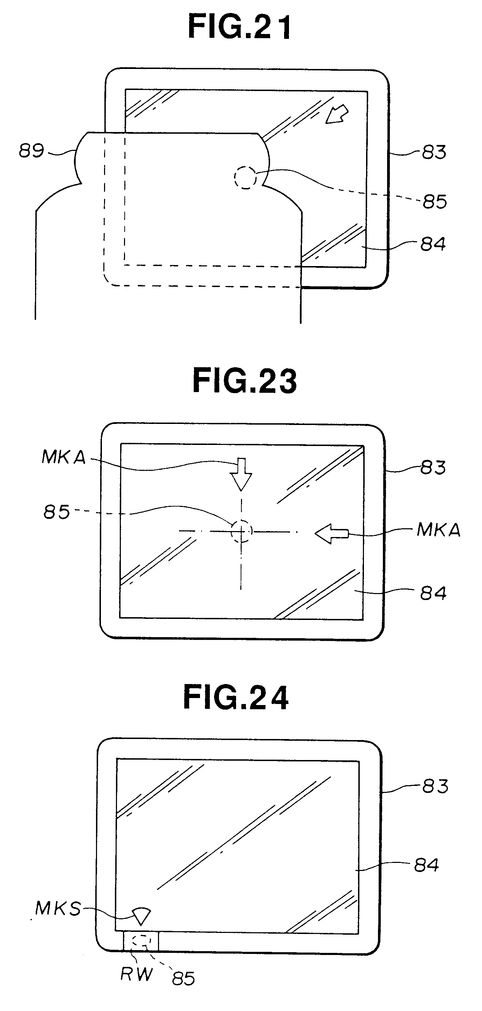

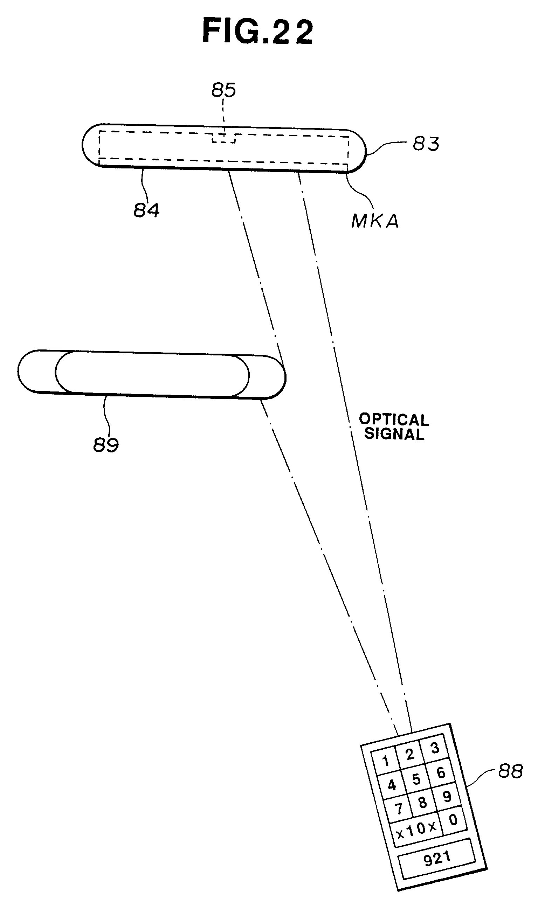

The operation of the embodiment shown in Fig. 20 shall be explained with reference to Figs. 21 and 22.Among the reference numerals shown in Figs. 21 and 22, those cited in other drawings have the same functions and therefore shall not be explained here.

Fig. 21 is a view of the liquid crystal panel 84 as seen from the viewer side when an obstacle 89 is interposed between the viewer and liquid crystal panel 84. Hidden by the obstacle 89, the accurate position of the photo receptor 85 can not be judged from the position of the viewer but the marker MKA is displayed in a position which can be confirmed from the position of the viewer and indicates the direction of the position of the photo receptor 85 so that the viewer may substantially locate the position of the photo receptor 85.

Fig. 22 shows the relative positions of the remote-controlling signal transmitter carried by the viewer, display 83 and obstacle 89.

The viewer transmits a optical signal from the remote-controlling signal transmitter 88 to the direction indicated by the marker MKA as a target. As shown in Fig. 22, the optical signal from the remote-controlling signal transmitter 88 is partly intercepted by the obstacle 89 but can well reach the photo receptor 85. If the viewer substantially locates the position of the photo receptor 85 and transmits the optical signal, the liquid crystal television receiver will be able to be positively remote-controlled.

Fig. 23 shows the embodiment as further developed Fig. 20 wherein two or more arrow type markers MKA are displayed on the liquid crystal panel 84 of the display 83 so that the viewer may accurately recognize the position of the photo receptor 85.

In Fig. 23, the position of the photo receptor 85 is at the intersection of two one-point chain lines extended in the directions indicated by the two arrow type markers MKA. If the viewer transmits the optical signal to this intersection as a target, the liquid crystal television receiver will be able to be positively remote-controlled. In such case, the marker may be displayed like a line including a straight line and a curve. By intersecting at least two line-like markers with each other, the position of the photo receptor 85 can be accurately recognized by the viewer. Therefore, the viewer can positively remote-control the liquid crystal television receiver.

In Fig. 24, the marker MKS is displayed on the liquid crystal panel 84 of the display 83 to indicate the position of the photo receptor 85 located on peripheral side and the back surface side of the liquid crystal panel 84.

In case a light receiving part RW including the photo receptor 85 is provided on the other surface than the liquid crystal panel 84 of the display 83, if the marker MKS is displayed on the liquid crystal panel 84 to indicate the direction of the position of the light receiving part, the viewer will be able to recognize the position of the light receiving part RW, to positively transmit the optical signal to the light receiving part RW and to positively remote-control the liquid crystal television receiver. When the invention of this embodiment is applied to a small displaying apparatus in which the light receiving part RW is small and inconspicuous, it will be more effective.

By the way, in the embodiment in Fig. 24, the liquid crystal panel 84 is used as a displaying body. Even if any other displaying body (such as a cathode ray tube) than it is used, the same effect will be obtained. Therefore, the displaying body is not limited to be a liquid crystal panel.

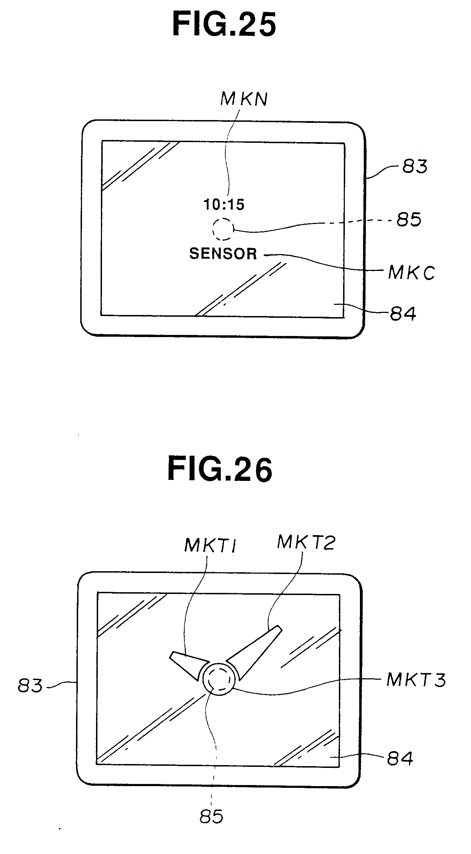

In Fig. 25, a character or numeral type marker MKN is displayed on the liquid crystal panel 84 of the display 83 to show the position of the photo receptor 85 located on the back surface side of the liquid crystal panel 84. The character or numeral type information in the position of the photo receptor 85 is most noticed by the viewer. If the character or numeral type marker MKN is displayed in or near the position of the photo receptor 85 located on the back surface side of the liquid crystal panel 84, the viewer will be able to positively recognize the position of the photo receptor 85. If a optical signal is transmitted to the marker MKN as a target, the liquid crystal television receiver will be able to be positively remote-controlled.

In Fig. 26, a plurality of figure type markers MKT1 to MKT3 are displayed as combined on the liquid crystal panel 84 of the display 83 to show the position of the photo receptor 85 located on the back surface side of the liquid crystal panel 84.

The markers MKT1 to MKT3 are figures imitating a clock. A marker MKT3 corresponding to the rotation center of the hands of the clock is displayed in the position of the photo receptor 85. Thus, if a figure likely to attract the attention of the viewer is displayed in or near the position of the photo receptor 85, the viewer will be able to positively recognize the position of the photo receptor 85. If a optical signal is transmitted to the markers MKT1 to MKT3 as targets, the liquid crystal television receiver will be able to be positively remote-controlled. The marker is made a figure in this embodiment but the marker itself may be whatever can attract the attention of the viewer. For example, a part displaying an eye of a picture image of a person may be made a marker.

Even if the displaying examples of the markers in Figs. 18 to 26 are used as combined, a sufficient effect will be obtained. In case the marker is displayed, not only a displaying process but also a switching, inverting or coloring process or the like may be for the maker. Also, the marker itself may represent the operating state of a device. For example, the attention of the viewer may be attracted by making the state of standing by the remote-controlling light reception before the power source is raised and the state of displaying the marker after the power source is raised different from each other.

As explained above, in this embodiment, the remote-controlling signal photo receptor is provided on the back surface side of the liquid crystal panel with the receiving surface directed toward the liquid crystal panel to receive the optical signal transmitted from the remote-controlling signal transmitter and to display the marker showing the position of the light receiving device on the picture so that the space of the remote-controlling light receiving part may be removed from the surface of the body of the remote-controllable apparatus. Therefore, the rate occupied by the displayed picture to the size of the apparatus body can be elevated and the viewer can easily recognize the position of the photo receptor and can positively remote-control the liquid crystal television receiver.

By the way, in the above described embodiment, the liquid crystal panel is used as a displaying body. However, the present invention can be applied to all the displaying bodies wherein the optical signal can permeate from the front side to the back side. If this condition is satisfied, the present invention will be able to be applied also to such displaying body as a plasma display. The present invention can be applied also, for example, to an apparatus using not only a displaying body as a television picture but also a light-permeable displaying body for a digit display or a function display.

In the above described embodiment, the signal light is produced from the signal for remote-controlling. However, the optical signal may be produced by converting the data used in the computer. That is to say, in such apparatus inputting data (an apparatus in which a data inputting device and displaying part are separated from each other) as a cordless word processor or personal computer, in case the data are transferred as converted to a optical signal, if a light-permeable displaying body is used in the receiving side apparatus, the present invention will be able to be applied.

It is needless to say that the present invention is not limited to this embodiment but can be worked in various forms unless the subject matters of the claims deviate.

### Industrial Utilizability:

As described above, according to the present invention, there can be provided a signal receiving apparatus provided with a photo receptor arranged with the receiving surface directed toward a light-permeable displaying body on the back surface side of the displaying body so that a optical signal transmitted from a remote place may permeate through this displaying body and may be input into the photo receptor and the restriction on the design or appearannce of an electronic device controlled or receiving data by using a optical signal transmitted from a remote place may be reduced.

## Claims

1. A signal receiving apparatus comprising:
a light-permeable displaying body; and
a photo receptor provided on the back surface side of said displaying body and having the photo receiving surface arranged as directed toward said displaying body,
characterized in that a optical signal transmitted from a remote place permeates through said displaying body and is input into said photo receptor.

2. A signal receiving apparatus according to claim 1 characterized in that said photo receptor is provided substantially in the central part of the displaying body on the back surface side of said displaying body and the receiving surface of said photo receptor is arranged as directed toward said displaying body.

3. A signal receiving apparatus according to claim 1 characterized by comprising a rotating means for rotatably holding said displaying body to change the direction of the displaying surface.

4. A signal receiving apparatus according to claim 1 characterized by comprising a transmitting means for transmitting an electric signal corresponding to the optical signal from said photo receptor to a controlling means of the electronic device to make said electronic device controllable.

5. A signal receiving apparatus according to claim 2 characterized in that the shape of said displaying body is rectangular and said central part is at the intersection of diagonals of said displaying body.

6. A signal receiving apparatus according to claim 3 characterized in that said photo receptor is provided around the rotary shaft of said rotating means.

7. A signal receiving apparatus according to claim 4 characterized in that said electronic device is independent of the body of said signal receiving apparatus.

8. A signal receiving apparatus according to claim 4 characterized in that said electronic device is set in the rear part of said displaying body.

9. A signal receiving apparatus according to claim 8 characterized in that said electronic device is provided with another optical signal receiving means than said photo receptor and the optical signal received from said optical signal receiving means is transmitted to said controlling means.

10. A signal receiving apparatus according to claim 1 characterized in that said photo receptor is provided in the displaying part displayed on said displaying body on the back surface side of said displaying body and the receiving surface of said photo receptor is arranged as directed toward said displaying body.

11. A signal receiving apparatus according to claim 10 characterized in that said photo receptor is provided substantially in the central part of said displaying part.

12. A signal receiving apparatus according to claim 10 characterized in that the shape of said displaying part is rectangular and said photo receptor is provided at the intersection of diagonals of said displaying part.

13. A signal receiving apparatus according to claim 1 characterized in that said photo receptor is provided in the non-displaying part of said displaying body on the back surface side of said displaying body and the receiving surface of said photo receptor is arranged as directed toward said displaying body.

14. A signal receiving apparatus according to claim 13 characterized in that said photo receptor is provided substantially in the central part of said non-displaying part.

15. A signal receiving apparatus according to claim 13 characterized in that the shape of said non-displaying part is rectangular and said photo receptor is provided at the intersection of diagonals of said non-displaying part.

16. A signal receiving apparatus according to claim 1 characterized in that said displaying body is provided on the front panel of the electronic device body, said photo receptor is provided toward the central part of the front panel of said electronic device body on the back surface side of said displaying body and the receiving surface of said photo receptor is arranged as directed toward said displaying body.

17. A signal receiving apparatus according to claim 16 characterized in that the shape of the front panel of said electronic device body is rectangular and said photo receptor is provided at the intersection of diagonals of said front panel.

18. A signal receiving apparatus according to claim 1 characterized by comprising a marker displaying means driving said displaying body and displaying on the displaying surface a marker showing the position of said photo receptor.

19. A signal receiving apparatus according to claim 18 characterized in that said marker is displayed as superimposed in the position in which said photo receptor is provided.

20. A signal receiving apparatus according to claim 19 characterized in that the area of said marker is displayed to be larger than the area of the receiving surface of said photo receptor.

21. A signal receiving apparatus according to claim 18 characterized in that said marker is a marker showing the direction of the position in which said photo receptor is provided.

22. A signal receiving apparatus according to claim 21 characterized in that said marker is displayed in a position separated by a predetermined distance from said photo receptor.

23. A signal receiving apparatus according to claim 22 characterized in that two or more of said markers are displayed on the displaying surface.

24. A signal receiving apparatus according to claim 23 characterized in that two or more of said markers are displayed on the displaying surface and the intersection of the extensions of the arrows of the two or more of the markers is in the position of said photo receptor.

25. A signal receiving apparatus according to claim 18 characterized in that said markers are displayed by two or more lines including straight lines and curves, and said photo receptor is positioned at the intersection of those lines.

26. A signal receiving apparatus according to claim 18 characterized in that said marker is a character or numeral type marker.

27. A signal receiving apparatus according to claim 18 characterized in that said marker is a combination of a plurality of figure type markers.

28. A signal receiving apparatus according to claim 18 characterized in that said marker is displayed by switching or inverting operation.

29. A signal receiving apparatus according to claim 18 characterized in that said marker will be displayed on the displaying surface while standing by receiving a light and the marker displaying state will be changed when a optical signal is received.

30. A signal receiving method characterized in that a optical signal transmitted from a remote place is passed through a light-permeable displaying body and is then input into a photo receptor.

31. A signal receiving apparatus comprising:
a displaying body having a light-permeability;
and a photo receptor receiving a optical signal transmitted from a remote place and being provided on the back surface side of said displaying body on a light path after a optical signal incident upon said displaying body is incident.

32. A signal receiving apparatus according to claim 31 characterized by comprising a marker displaying means driving said displaying body to display on said displaying body a marker showing a target position of transmitting said optical signal.

33. A signal receiving apparatus or signal receiving method according to claim 1, 31 or 30 characterized in that said optical signal is produced on the basis of a controlling signal for remote-controlling.

34. A signal receiving apparatus or signal receiving method according to claim 1, 31 or 30 characterized in that said optical signal is produced on the basis of data used within a computer.

35. A signal receiving apparatus or signal receiving method according to claim 1, 31 or 30 characterized in that said displaying body is a liquid crystal panel.
